# EUROPEAN PATENT APPLICATION

(11) **EP 1 211 617 A2**
(43) Date of publication of application: **05.06.2002**
(21) Application number: 01310029.2
(22) Date of filing: 30.11.2001
(51) Int. Cl.: G06F 17/30

(54) **Presentation system for turbocompressor information**

(30) Priority: 30.11.2000 US 728379
(71) Applicant: NUOVO PIGNONE S.p.A., 50127 Firenze (IT)
(72) Inventor: Castaldi, Andrea, Florence (IT); Quaranta, Christina, Florence (IT); Vezzoli, Marie Christine, Arese (Milan) (IT); Giovani, Gabriele, Siena (IT); Tani, Fabrizio, Florence (IT)
(74) Representative: Goode, Ian Roy

(57) **Abstract**

A method and system for collecting operating conditions (901) of a turbocompressor from a potential purchaser, for selecting (904) and presenting (906) the turbocompressor that satisfies those operating conditions, and for receiving requests for quotations (907) for a selected and presented turbocompressor is provided. The presentation system provides a server that collects the operating conditions and uses an analysis engine to identify a turbocompressor that satisfies the operating conditions.

## Description

The described technology generally relates to a user interface for accessing turbocompressor information.

It has traditionally been both time-consuming and expensive for purchasers of turbocompressors to identify the appropriate turbine and compressor combination for their pipelines. These purchasers typically send their technical data in the form of a request for proposal via facsimile or electronic mail to a local sales representative of a seller of turbocompressors. This local sales representative in turn forwards that technical data to engineers who perform the technical selection of the turbine and compressor combination, prepare a detailed proposal, and forward the proposal to the local sales representative. The local sales representative then presents the proposal to the potential purchaser. The process from receipt of a request for proposal by the local sales representative to the selecting and presenting of the proposal to the potential purchaser can take several weeks.

This process can take even longer when the technical data that is received from a potential purchaser is missing certain important data without which a selection cannot be made. In addition, the technical data supplied by the potential purchaser may be internally inconsistent and thus needs to be clarified before a proposal can be prepared. As a result, the engineers often need to ask the local sales representative to collect additional information from the potential purchaser, which further delays the selecting and presenting of the proposal.

Any delay in the selecting and presenting of a proposal is problematic. The first seller who provides a proposal for a project may have a competitive advantage over other sellers who provide their proposals a week or two later. Also, the potential purchaser's requirements may change frequently when the feasibility of the project is being evaluated. A seller who can rapidly respond to these changes in requirements will have an advantage over the sellers who cannot.

It would be desirable to have a system that would allow potential purchasers to easily identify turbocompressors that will satisfy the operating conditions of their project, specify the scope of supply for the purchase of that turbocompressor, and request a quotation for the purchase of the turbocompressor with the specified scope of supply.

Embodiments of the invention will now be described, by way of example, with reference to the accompanying drawings, in which:
Figure 1 illustrates a display page for creation and selection of a project.
Figure 2 illustrates a display page for viewing existing projects.
Figure 3 illustrates a display page for entry of operating conditions.
Figure 4 illustrates a display page for the entry of the composition of the process gas.
Figure 5 illustrates a display page containing results of the turbocompressor selection.
Figure 6A illustrates a display page with detailed technical data and performance information.
Figure 6B illustrates a display page for a sample performance curve.
Figure 6C illustrates a display page for turbocompressor general arrangement.
Figure 6D illustrates a display page for turbocompressor package description.
Figure 7A illustrates a display page for selecting a package checklist.
Figure 7B illustrates a display page for specifying the scope of supply.
Figure 8 illustrates a display page for submitting a request for proposal.
Figure 9A is a flow diagram illustrating the overall processing of the presentation system in one embodiment.
Figure 9B is a block diagram illustrating the components of the presentation system in one embodiment.
Figure 10 is a flow diagram illustrating the processing of the generate operating conditions page component in one embodiment.
Figure 11 is a flow diagram illustrating the processing of the calculate component in one embodiment.
Figure 12 is a flow diagram illustrating the processing of a save component in one embodiment.
Figure 13 is a flow diagram illustrating the processing of the generate scope of supply component in one embodiment.
Figure 14 is a flow diagram illustrating the processing of the calculate engine in one embodiment.
Figure 15 is a flow diagram illustrating the processing of the verify engine in one embodiment.

A method and system for collecting operating conditions of a turbocompressor from a potential purchaser, for selecting and presenting the turbocompressor that satisfies those operating conditions, and for receiving requests for quotations for a selected and presented turbocompressor is provided. In one embodiment, the presentation system is implemented using a client/server architecture. The client systems are computers that may be located at the site of potential purchasers, and the server system is a computer that may be under the control of the seller. The server system provides to the client systems display pages of turbocompressor-related information. These display pages allow users of the client systems to input desired operating conditions of a turbocompressor. When the server system receives these operating conditions from a client system, it uses an accurate technical analysis engine to identify a turbocompressor that satisfies the received operating conditions. The results of its analysis include the identification of the identified turbocompressor, various performance graphs relating to the turbocompressor, and other related information. The server system then sends to the client system a display page that identifies the turbocompressor and that provides selected information about the performance of the turbocompressor. The user can then view the display page at the client system. The server system provides additional display pages that include graphical representations of various performance conditions of the identified turbocompressor. These graphical representations may be provided to the presentation system on the basis of data elaborated by the technical analysis engine. The server system also provides display pages with more detailed information about the performance of the turbocompressor and display pages that graphically depict the layout of the turbocompressor. Once a user is satisfied that the identified turbocompressor meets their requirements, the user may submit a request for proposal using a display page provided by the server system. Prior to submitting the request for proposal, the user may use display pages provided by the server system to specify the desired scope of supply. Upon receiving a request for proposal, the server system notifies a representative of the seller, so that the proposal can be generated. The server system also provides a mechanism that allows a user to save their specified operating conditions and results. At a later time, the user may retrieve the saved operating conditions and results and continue with their review of the turbocompressor information. In this way, the presentation system allows a potential purchaser to quickly determine whether the seller has a turbocompressor that satisfies its requirement and to submit a request for proposal at that time. Also, the presentation system ensures that sufficient information is collected initially to prepare a proposal and thus avoids the delays associated with receiving incomplete or inconsistent data.

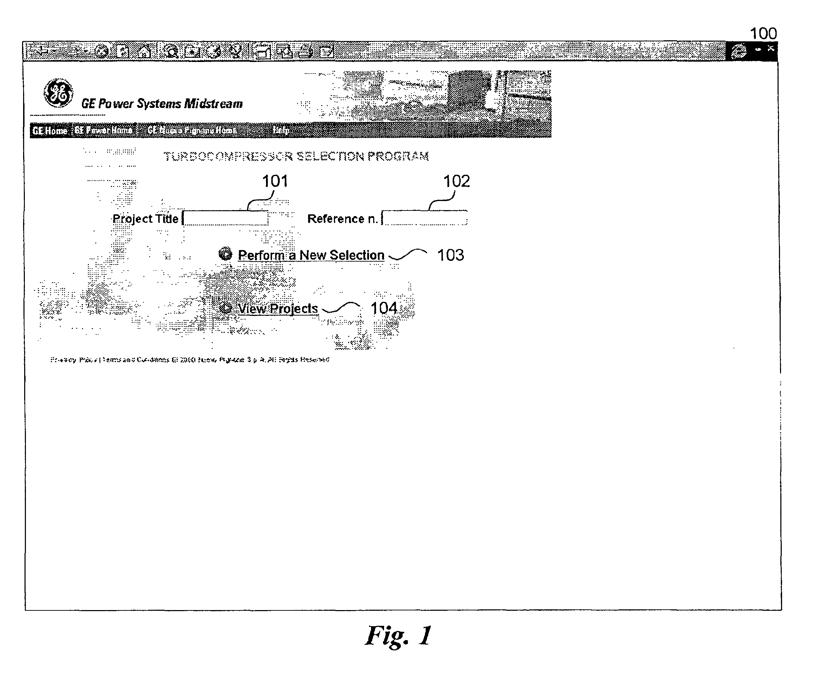

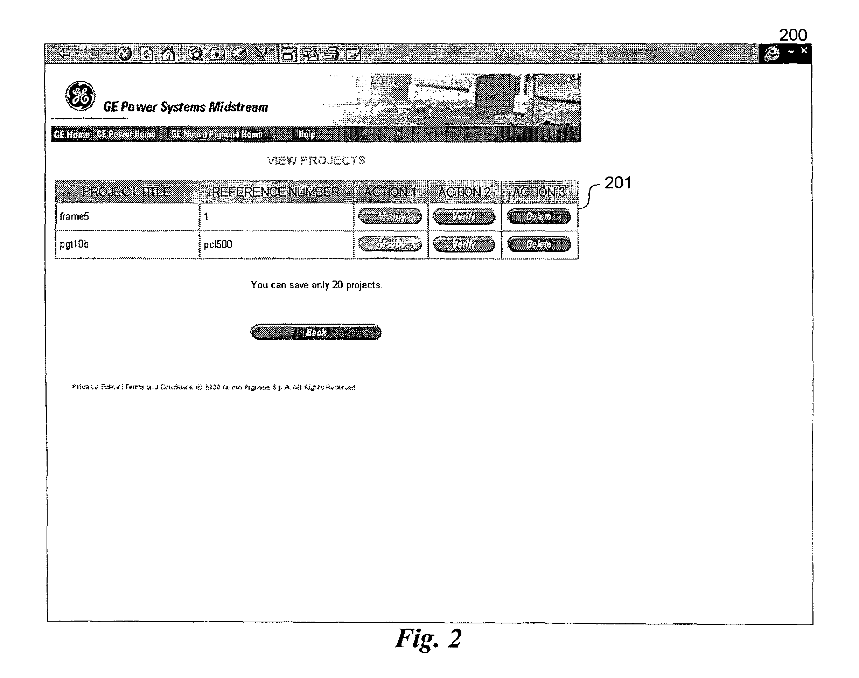

Figures 1-8 illustrate display pages of the presentation system in one embodiment. Figure 1 illustrates a display page for selection of a project. A project represents the operating conditions and results relating to the selection of a single turbocompressor. Display page 100 includes a project title field 101, a reference number field 102, a perform new selection link 103, and a view projects link 104. To initialize a new project, the user enters the project title and reference number and selects the perform new selection link. To select an existing project, a user selects the view projects link. Figure 2 illustrates a display page for viewing existing projects. Display page 200 includes projects table 201. The projects table includes a row for each existing project. Each row identifies a project title and reference number. Each row also includes buttons representing various actions that can be performed on the project. In one embodiment, the presentation system provides actions to modify, verify, or delete a project. The modify action allows a user to create a new project starting with the operating conditions of an existing project. The user can then modify those operating conditions as appropriate. The verify action allows a user to evaluate the performance of an existing project with operating conditions different from input selection conditions. The delete action allows a user to delete an existing project.

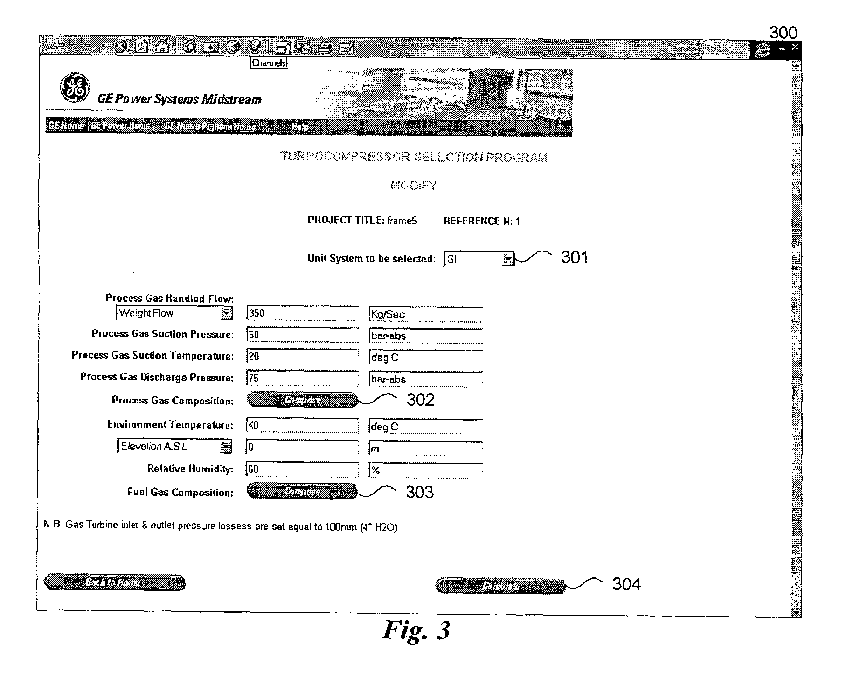

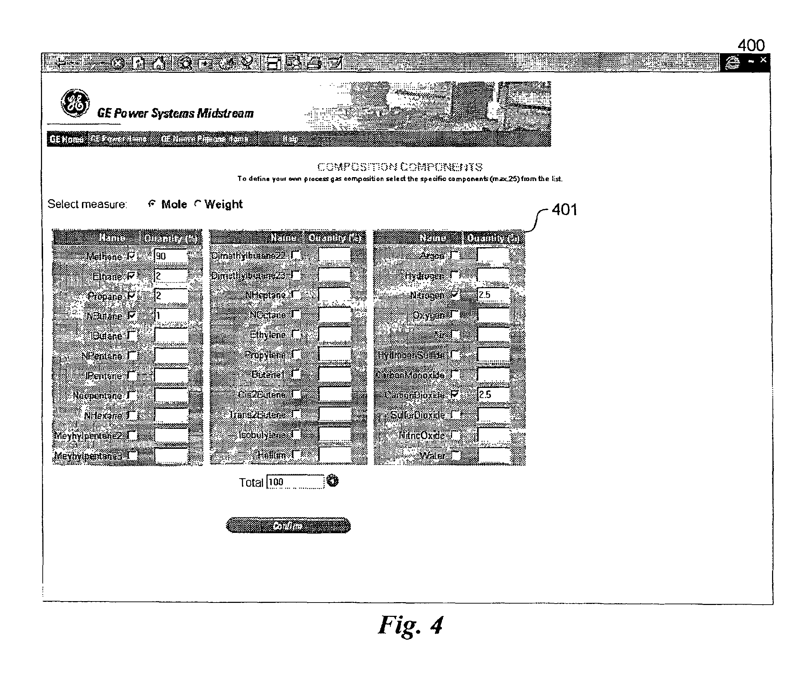

Figure 3 illustrates a display page for entry of operating conditions. Display page 300 includes a units field 301, various data entry fields, compose buttons 302 and 303, and a calculate button 304. A user enters the units of measurement into the units field. The user also enters the values for the various operating conditions, such as process gas suction pressure and process gas suction temperature, in the appropriate data entry field. When a compose button is selected, the presentation system provides a display page for entry of the composition of the process gas or the fuel gas. When the operating conditions have been entered, the user selects the calculate button to perform the selection of a turbocompressor that satisfies the operating conditions. Figure 4 illustrates a display page for the entry of the composition of a gas. Display page 400 includes composition entry area 401, in which the user can specify the percentage of various components of the gas. The presentation system displays the total percentage in the total field. The new user selects the confirm button to return to the display page of Figure 3. Table 1 specifies the operating conditions in more detail.

**Table 1**

| **Data** | **Description** |
|---|---|
| Process gas handled flow | The process gas handled flow at the compressor inlet flange. The handled flow can be entered as weight, volume or normal (SI) / standard (US) flow. |
| Process gas suction temperature | The process gas temperature at the compressor inlet flange. |
| Process gas suction pressure | The process gas pressure at the compressor inlet flange. |
| Process gas discharge pressure | The desired process gas discharge pressure. The recommended ratio between the discharge and the suction pressure is in the range of 1.15-1.6. |
| Process gas composition | A standard process gas composition set by default allows users to proceed in running the program. By selecting the compose button, it is possible to input a different process gas composition, select a maximum of 25 components from the list and enter the relevant quantities. If the total quantity of the components exceeds (or is less than) 100%, the system automatically adjusts the values uniformly in order to keep the sum equal to 100%. |
| Environment temperature | The project design ambient temperature default data is set equal to ISO conditions (15° C, i.e., 60F). |
| Elevation ASL | The project site elevation or the ambient pressure default data is set equal to ISO condition (0 m a.s.l. or 1.013 Bar, i.e., 14.7 psia). |
| Relative humidity | The project relative humidity default data is set equal to ISO condition (60%). |
| Fuel gas composition | A standard fuel gas composition is set by default equal to the process gas composition previously specified. By clicking the compose button, it is possible to input a different gas composition, select a maximum 25 components from the list and enter the relevant quantities. If the total quantity of the components exceeds (or is less than) 100%, the system automatically adjusts the values uniformly in order to keep the sum equal to 100%. After having entered the fuel gas composition, if the user modifies the process gas composition, the system automatically sets the fuel gas composition to the same. |

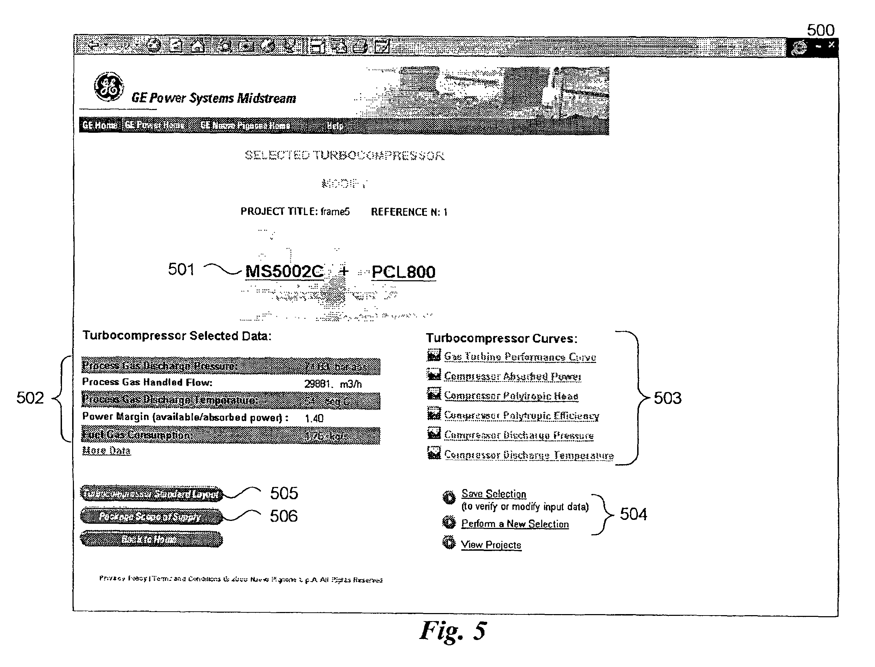

Figure 5 illustrates a display page containing results of the turbocompressor analysis. Display page 500 includes a turbocompressor identification area 501, a selected data area 502, performance curve links 503, action links 504, a layout button 505, and a scope of supply button 506. The turbocompressor identification area includes the model identifiers of the identified turbine and compressor. In this example, the model identifier of the turbine is "MS5002C" and of the compressor is "PCL800." The selected data area provides an overview of various conditions of the identified turbocompressor as it performs with the operating conditions. In this illustration, the selected data includes process gas discharge pressure, process gas handled flow, process gas discharge temperature, power margin, and fuel gas consumption. The display page includes a "more data" link through which more detailed information on the identified turbocompressor can be obtained. The performance curve links provide access to various performance curves relating to the identified turbocompressor. When one of the performance curve links is selected, then a display page with the corresponding performance curves is displayed. The action links allow the user to save the project, create a new project, or view an existing project. When the layout button is selected, the presentation system provides a display page with a graphic representation of the layout of the identified turbocompressor. When the scope of supply button is selected, the presentation system provides a display page so that the user can specify the desired scope of supply for the project.

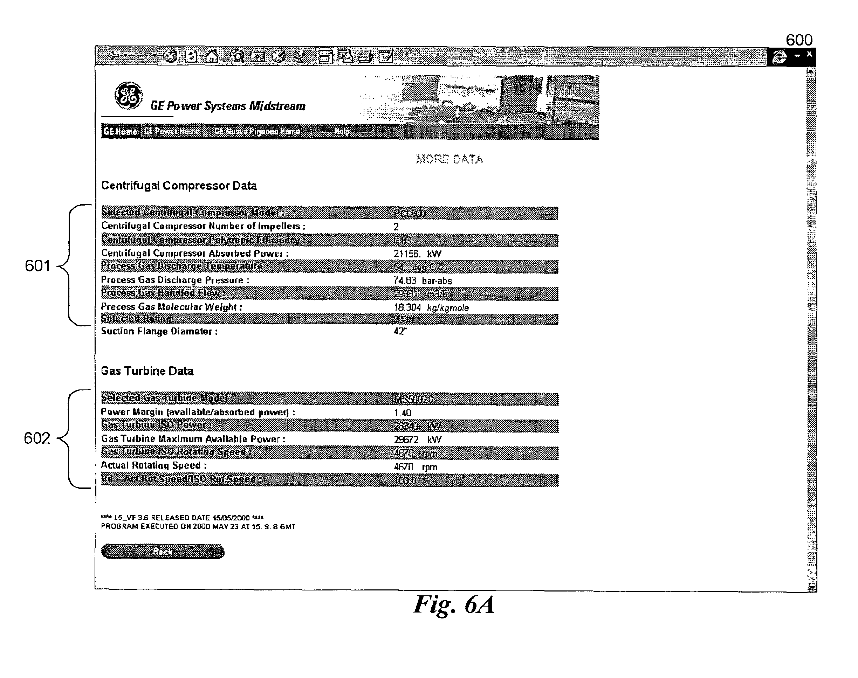

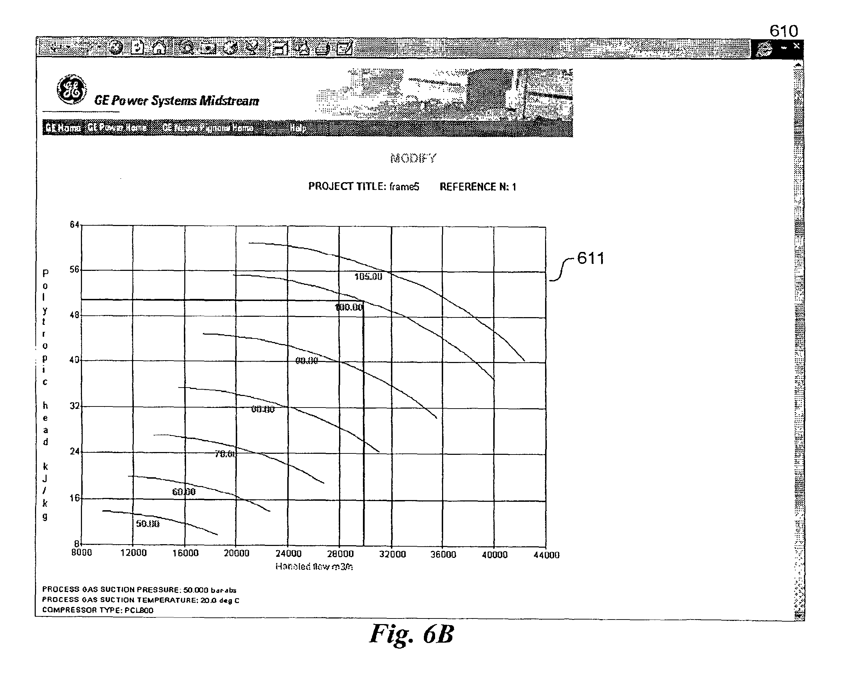

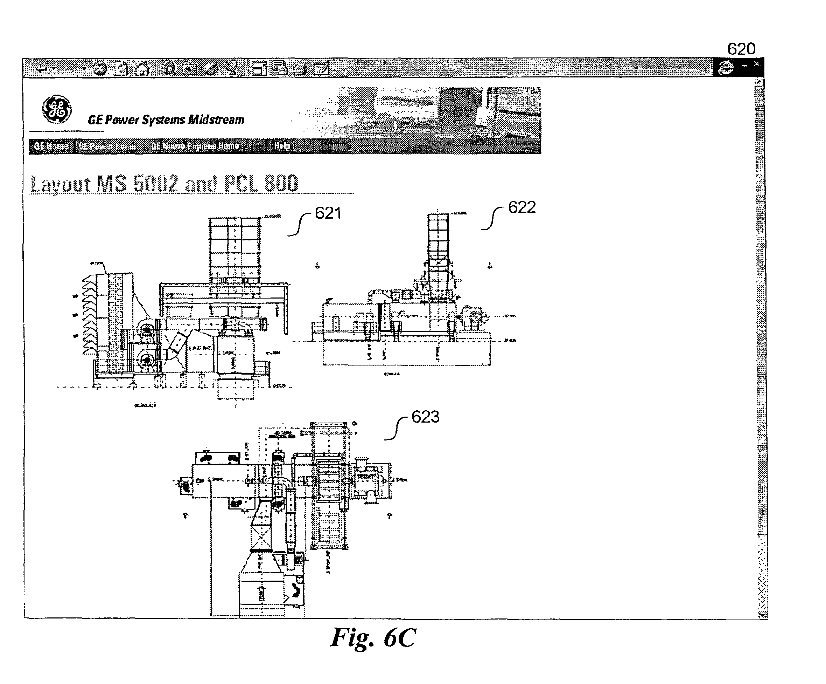

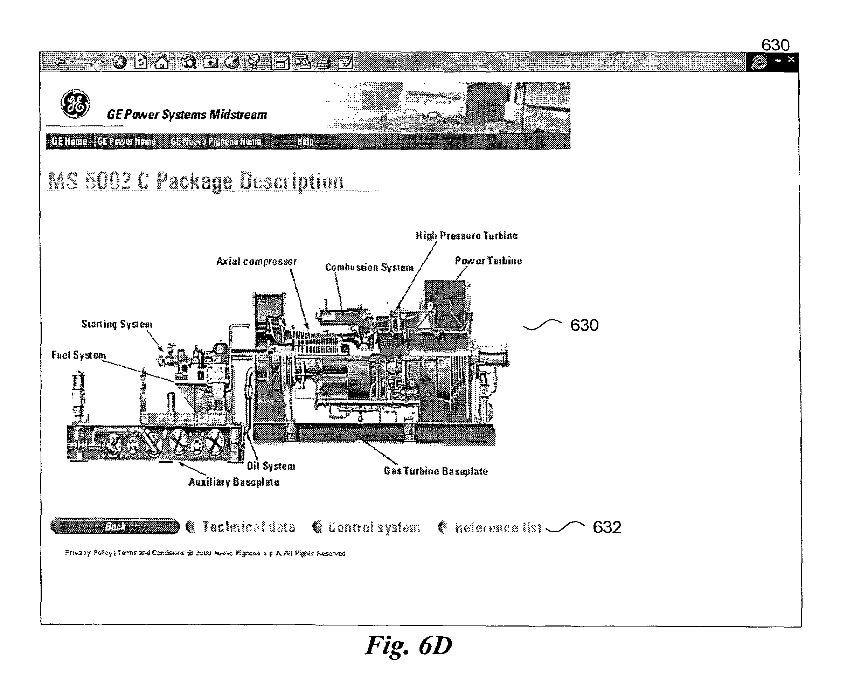

Figure 6A illustrates a display page with detailed performance information. Display page 600 includes a centrifugal compressor data area 601 and a gas turbine data area 602. The centrifugal compressor data area includes information, such as number of impellers and polytropic efficiency. The gas turbine data area includes information, such as power margin and rotating speed. If a turbocompressor cannot be identified that satisfies the operating conditions, then an error message is sent to the user. Figure 6B illustrates a display page for a sample performance curve. Display page 610 includes a graph 611 of the polytropic head performance data. In this example, the graph displays the polytropic head versus the process gas at different rotating speeds expressed in percentage of the gas turbine ISO rotating speed. Figure 6C illustrates a display page for the layout of the turbine and compressor combination. Display page 620 includes views 621, 622, and 623 of the turbocompressor layout. These views encompass the all orthogonal projections (front, lateral and up views) of the machine final layout. Figure 6D illustrates a display page with a graphic representation of the identified turbine. Display page 630 includes the graphics representation 631. The presentation system provides this type of display page when the user selects the model number of the identified turbine or compressor. The links 632 are used to retrieve technical data, control system data, and reference list information for the identified turbine.

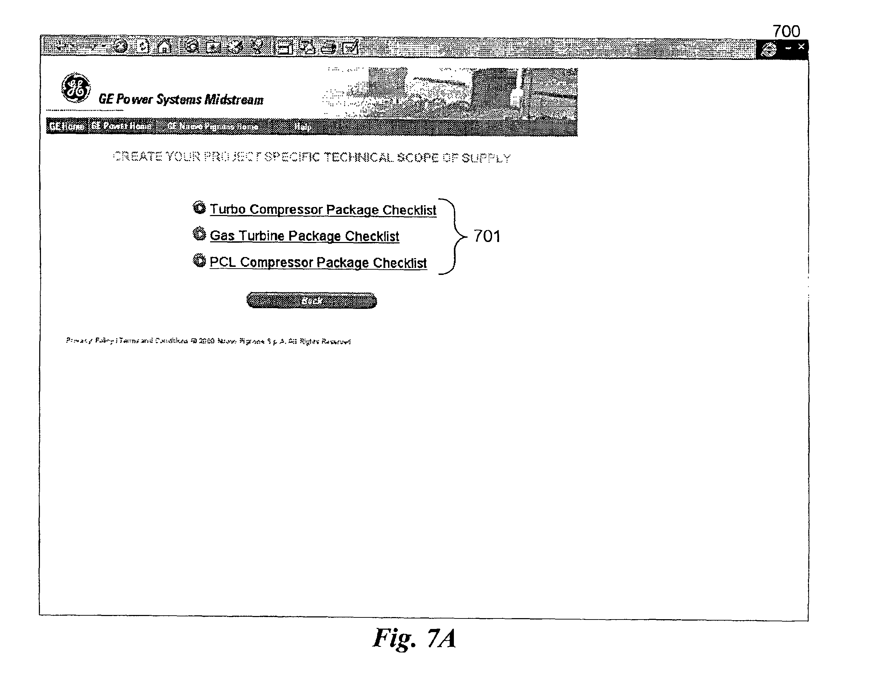

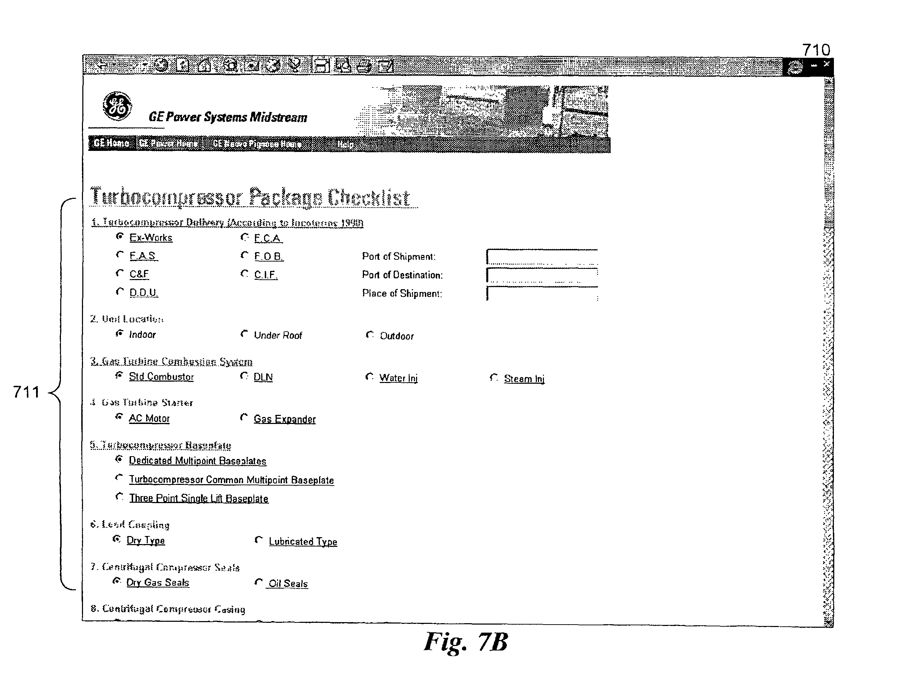

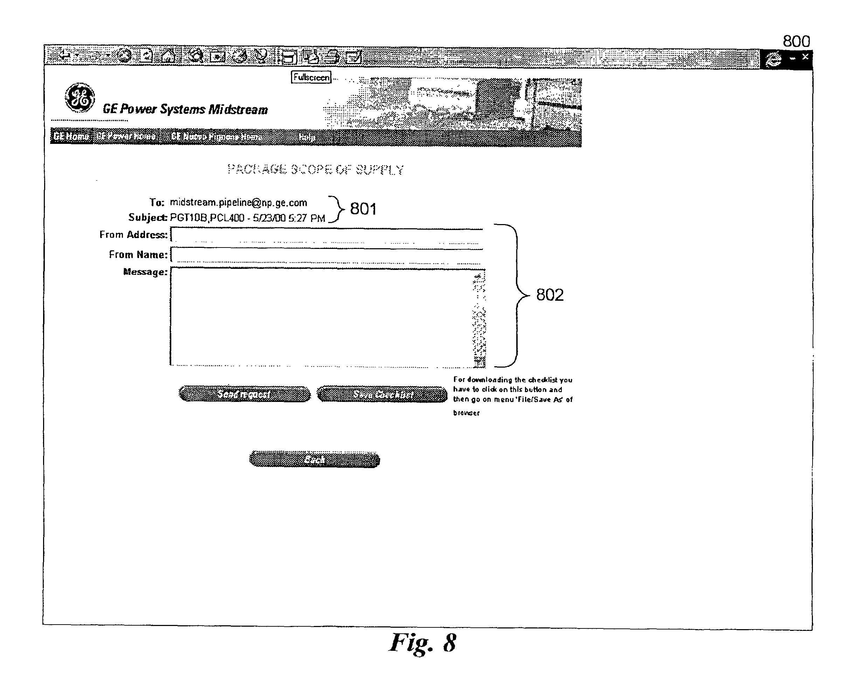

Figure 7A illustrates a display page for selecting a package checklist. Display page 700 includes package checklist links 701. A user selects a package checklist link to access a display page for specifying the technical scope of supply for the project. Figure 7B illustrates a display page for specifying the scope of supply for the turbocompressor. Display page 710 includes a package checklist area 711. The package checklist area includes information such as the turbocompressor delivery terms and delivery location, unit location (e.g., indoors), gas turbine combustion system, and so on. Once a user specifies the scope of supply for a project, the user can submit a request for proposal. Figure 8 illustrates a display page for submitting a request for proposal. Display page 800 includes an electronic mail address area 801 and an electronic mail data area 802. The user can use the message area of the electronic mail data area to input additional information relating requested scope of supply. When a user selects the send request button, the presentation system records the request for proposal and may send an electronic mail notification to the person responsible for responding to the request for proposal.

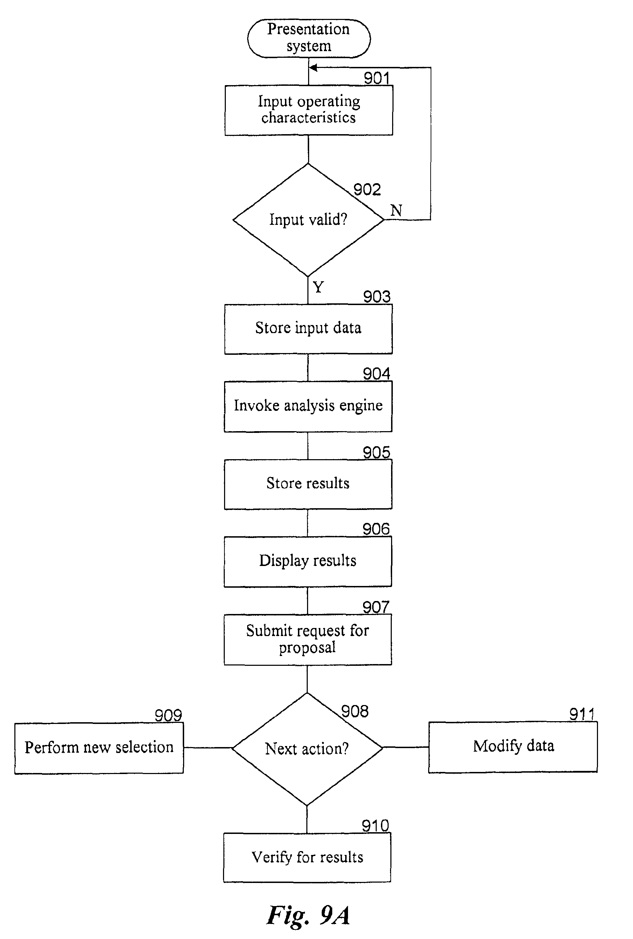

Figure 9A is a flow diagram illustrating the overall processing of the presentation system in one embodiment. In block 901, the system inputs the operating conditions of the turbocompressor from the user. In decision block 902, the system determines whether the operating conditions are valid. If the operating conditions are valid, then the system continues at block 903, else the system loops to block 901 to request re-entry of the operating conditions. In block 903, the system stores the input operating conditions in a file. In block 904, the system invokes the technical analysis engine to identify a turbocompressor that satisfies the stored operating conditions. In block 905, the system stores the results which identify the turbocompressor and may include performance information and graphs relating to the turbocompressor. In block 906, the system controls the display of the results. In block 907, the system, upon user request, submits a request for proposal with a scope of supply that is specified by the user. In decision block 908, the system inputs the next action that the user wants to perform. If the action is to perform a new selection, the system continues at block 909. If the action is to verify the result, then the system continues at block 910. If the action is to modify the operating conditions, then the system continues at block 911. Blocks 909-911 control the performing of the indicated actions.

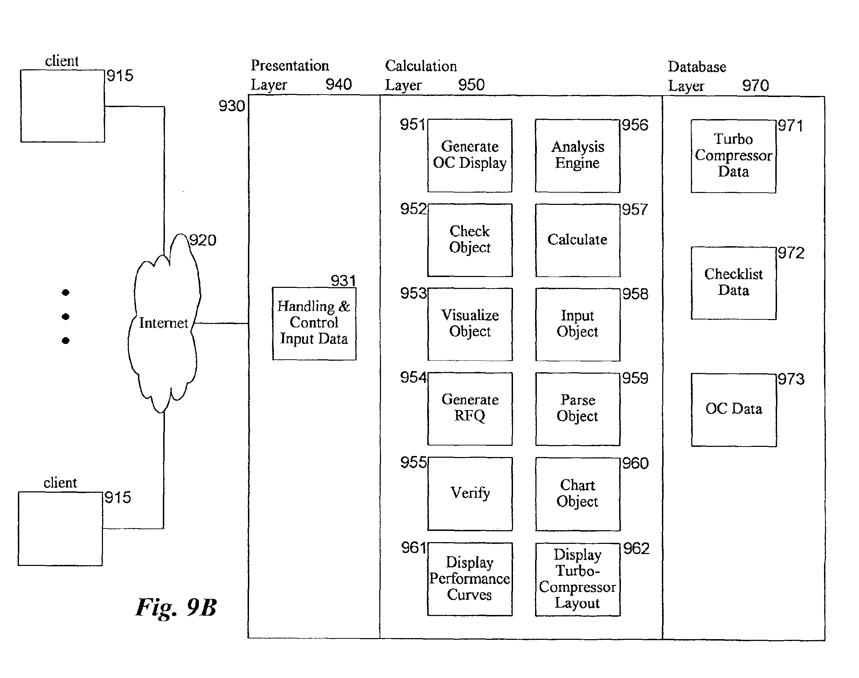

Figure 9B is a block diagram illustrating the components of the presentation system in one embodiment. The presentation system includes client computers 915 and at least a server computer 930 that are interconnected via the Internet 920. The computers may include a central processing unit, memory unit, input devices (e.g., keyboard and pointing devices), output devices (e.g., display devices), and storage devices (e.g., disk drives). The memory and storage devices are computer-readable media that may contain instructions that implement the presentation system. In addition, the data structures and message structures may be stored or transmitted via a data transmission medium, such as a signal on a communications link. Various communications channels other then the Internet may be used, such as local area networks, wide area networks, or point-to-point dial-up connections. The client computers may include a standard web browser for viewing web pages provided by the server system. In one embodiment, the server system is divided into four layers: a security layer (not shown), a presentation layer 940, a calculation layer 950, and a data layer 970. The security layer controls access to the presentation system, for example, by using the logon/password combinations. The presentation layer controls the receiving of requests for display pages and sending the generated display pages to the client computers using the handling and control user input data component 931. This layer invokes the services of the calculation layer to perform the functionality needed to select a turbocompressor, display the results, and so on. The calculation layer includes various objects (e.g., Java beans and Java objects) that implement the business logic of the presentation system. The data layer provides the databases of the presentation system. The objects of the calculation layer access the databases directly. The layered architecture results in minimizing web traffic between the client and middleware (calculation layer), enhances interoperability and portability of the presentation system, facilitates maintenance, is easily scalable, and affords enhanced protection to the business logic.

The calculation layer includes a generate operating conditions object 951, the check object 952, the visualized object 953, the generate RFQ object 954, the verify object 955, the technical analysis engine 956, the calculate object 957, the input object 958, the parse object 959, the chart object 960, the display performance curves object 961, and the display turbocompressor layout object 962. The calculate object manages the invoking of the technical analysis engine, which identifies the turbocompressor and generates the performance graphs. The check object validates the operating conditions input by a user. The visualize object controls the display of the results. The generate RFQ object controls the sending of an electronic mail message to a person who can prepare the quote when a user requests a quote. The input object converts the operating conditions into a format that can be used by the technical analysis engine. The parse object controls the collecting of scope of supply data. The chart object controls the display of the performance charts. A connection object manages the connections to the database (object not shown).

The database layer includes turbocompressor data 971, a checklist data 972, and an operating conditions data 973. The operating conditions data consists of the operating conditions for each project. The turbocompressor data consists of the results of the most recent analysis for each project and may contain performance conditions and graphic layout information for each possible turbine and compressor combination.

The handling and control input data component receives a request for web pages from the client computers and invokes the appropriate component for processing the request. The generate operating conditions page component generates a web page for data entry of the operating conditions and sends the generated web page to the requesting client computer. The calculate component is invoked when a calculate button is selected by the user. The calculate component invokes the check object to validate the operating conditions, prepares the operating conditions for input to the technical analysis engine using the input object, invokes the technical analysis engine using the calculate object, and generates and sends a results web page. The verify component collects modified operating conditions for verification. The generate RFQ component prepares the operating conditions, results, scope of supply, and comments of a project, using the parse object and notifies the seller that a proposal has been requested. The display performance curves component is invoked when a performance curve link is selected and generates a web page with the selected performance curve information using the chart object. The display turbocompressor layout component is invoked when a user selects a layout button. The display turbocompressor layout component generates using the visualize object and sends a graphic representation of the identified turbocompressor to the client computer.

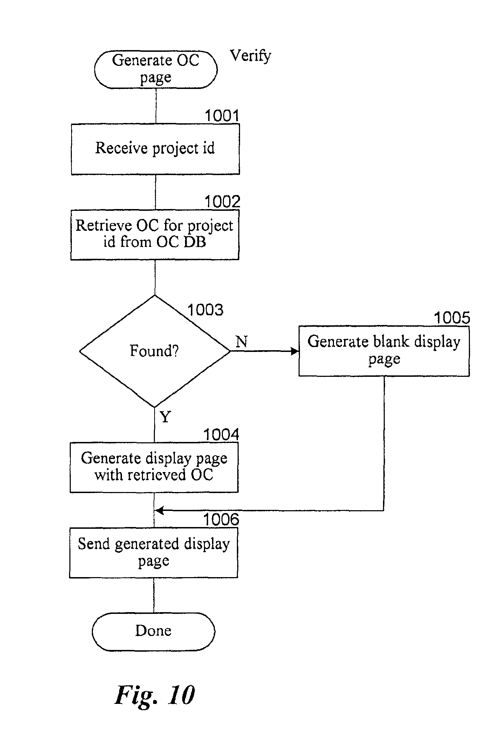

Figures 10-15 are flow diagrams illustrating processing of the presentation system in one embodiment. Figure 10 is a flow diagram illustrating the processing of the generate operating conditions page component in one embodiment. This component is invoked when a user selects either an existing project or a new project. In block 1001, the component receives the project identifier that was entered by the user on the display page illustrated by Figure 1. In block 1002, the component retrieves the operating conditions for the project identifier from the operating conditions database. In decision block 1003, if the operating conditions are found for that project identifier, then the project is an existing project and the component continues at block 1004, else the component continues at block 1005. In block 1004, the component generates a display page for entry of operating conditions with the fields initialize to the retrieved operating conditions. In block 1005, the component generates a display page for entry of operating conditions with the fields un-initialized or initialized to default values. In block 1006, the component sends the generated display page to the client computer and then completes.

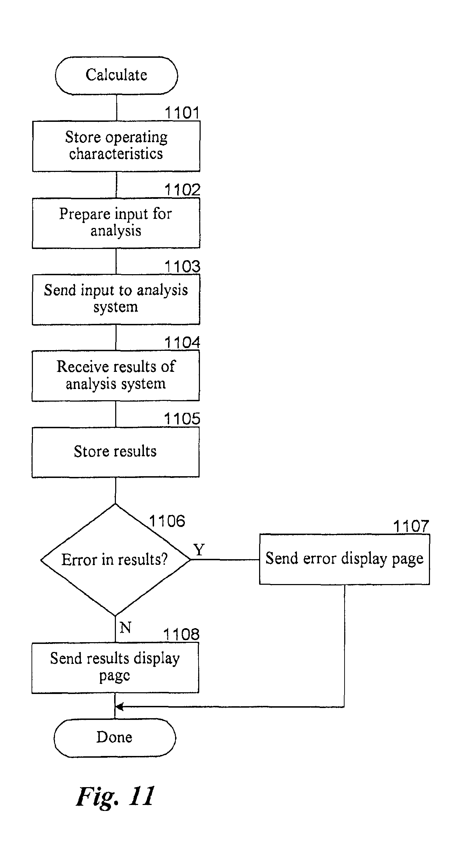

Figure 11 is a flow diagram illustrating the processing of the calculate component in one embodiment. In block 1101, the component stores the current operating conditions for the project in a temporary area. The component validates the operating conditions by invoking the check object. The validations may include checking whether each operating characteristic is within a specific range. The user is notified if the data is not valid. In block 1102, the component prepares the input for the technical analysis engine based on the desired operating conditions using the input object. The actual input needed will vary based on the requirements of the technical analysis engine. In block 1103, the component sends the input to the technical analysis engine using the calculate object. In block 1104, the component receives the results of the technical analysis engine. In block 1105, the component stores the results of the analysis in a temporary area. In decision block 1106, if an error is detected in the results, then no turbocompressor has been found and the component continues at block 1107, else the component continues at block 1108. In block 1107, the component sends an error display page message and then completes. In block 1108, the component sends a results display page such as the display page of Figure 5 and then completes.

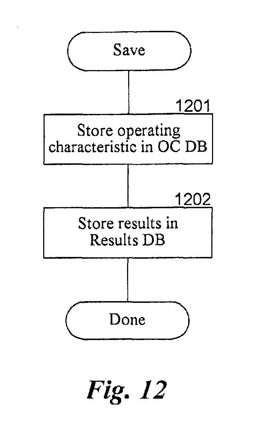

Figure 12 is a flow diagram illustrating the processing of a save component in one embodiment. In block 1201, the component stores the operating conditions for the currently selected project in the operating conditions database. In block 1202, the component stores the current results for the selected project in the results database and then completes.

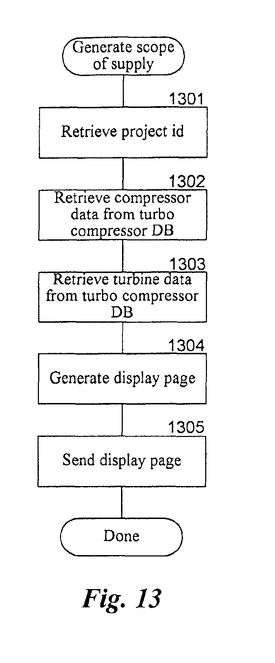

Figure 13 is a flow diagram illustrating the processing of the generate scope of supply component in one embodiment. In block 1301, the component retrieves the project identifier for the currently selected project. In block 1302, the component retrieves the compressor data from the turbocompressor database. In block 1303, the component retrieves the turbine data from the turbocompressor database. The compressor and turbine data may identify the various options that may be specified when the turbocompressor is purchased. In block 1304, the component generates a display page for the scope of supply. In block 1305, the component sends the generated display page to the client computer and then completes.

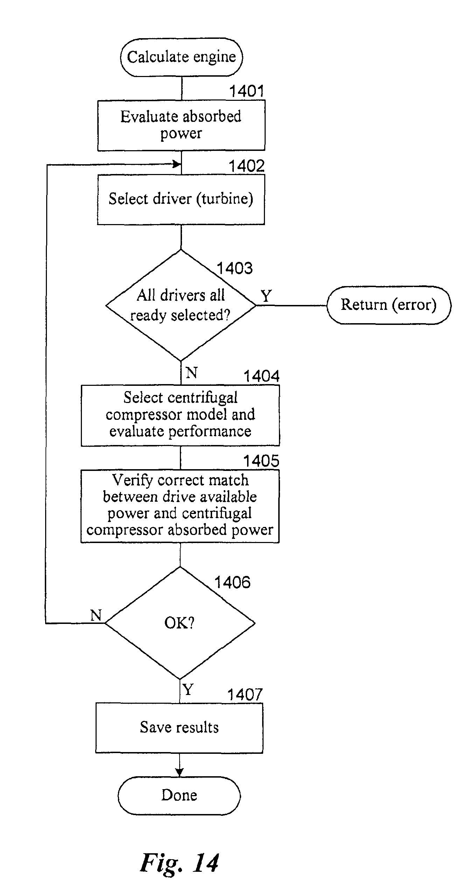

Figure 14 is a flow diagram illustrating the processing of the technical analysis engine in one embodiment. In block 1401, the engine evaluates the absorbed power indicated by the input data for the compressor. Such techniques are described in "The Polytropic Analysis of Centrifugal Compressors," by John Schultz, published in the Journal of Engineering and Power, January 1962, 1969; "Fluid Thermodynamics Properties for Light Petroleum System," by Kenneth Stirling, published by Gulf Publishing Co., 1973; "The Properties of Gases and Liquids," by Ried, Prawantz, and Sherwood, published by McGraw-Hill, New York, 1977 (3rd edition); and "Technical Data Book - Petroleum Refining," published by the American Petroleum Institute in 1976. In blocks 1402-1407, the engine loops selecting various combinations of turbines and compressors. In block 1402, the engine selects the next turbine. In decision block 1403, if all of the turbines have already been selected, then no turbine and compressor combination has been found that satisfies the operating conditions and the engine returns, else the engine continues at block 1404. In block 1404, the engine selects a centrifugal compressor model and evaluates its performance. In block 1405, the engine verifies if there is a match between the available power of the turbine and absorbed power of the compressor. In decision block 1406, if a match is found, then a satisfactory turbine and compressor combination has been selected and the engine returns its results, else the engine loops to block 1402 to select the next turbine that satisfies the evaluated absorbed power.

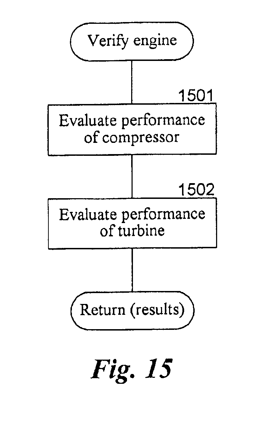

Figure 15 is a flow diagram illustrating the processing of the verify engine in one embodiment. In block 1501, the engine evaluates the performance of the compressor. In a block 1502, the engine evaluates the performance of the turbine. The engine then returns its results.

For completeness, various aspects of the invention are set out in the following numbered clauses:
1. A computer-based method for displaying results of a turbocompressor analysis at a user computer (915), the turbocompressor having a turbine and a compressor, the method comprising:
   sending a data entry web page (300, 400) to the user computer, the data entry web page for entry of operating conditions of a desired turbocompressor;
   receiving (901) from the user computer the operating conditions entered by the user through the data entry web page; and
   sending a results web page (600, 610, 620) to the user computer, the results web page identifying a turbocompressor that satisfies the operating conditions received entered by the user.
2. The method of clause 1 including providing a web page (610) for graphically displaying turbocompressor performance information for the identified turbocompressor.
3. The method of clause 2 wherein the turbocompressor performance information includes a gas turbine performance curve, a compressor absorbed power curve, a compressor polytropic head curve, a compressor polytropic efficiency curve, a compressor discharge pressure curve, or a compressor discharge temperature curve.
4. The method of clauses 1-3 including providing a web page (620) that provides a graphic representation of the turbine of the identified turbocompressor.
5. The method of clause 4 including providing a web page (710) that provides a description of technical data, control system, or reference list associated with the turbine of the identified turbocompressor.
6. The method of clauses 1-5 including providing a web page (620) that provides a graphic representation of the compressor of the identified turbocompressor.
7. The method of clause 6 including providing a web page that provides a description of technical data, control system, or reference list associated with the compressor of the identified turbocompressor.
8. The method of clauses 1-7 including providing a web page (620) that provides a graphic representation of the layout of the identified turbocompressor.
9. The method of clauses 1-8 including providing a web page (710) through which the user can specify technical scope of supply for the identified turbocompressor.
10. The method of clause 9 including providing a web page (710) through which a request for quotation for the identified turbocompressor with the specified scope of supply can be submitted.
11. The method of clauses 1-10 including:
   sending to the user computer a modify data entry web page for modifying the entered operating conditions;
   receiving from the user computer modified operating conditions entered by the user through the modify data entry web page; and
   sending to the user computer a web page indicating performance of the identified turbocompressor with the modified operating conditions.
12. A computer system through which users can access turbocompressor information, the turbocompressor having a turbine and a compressor, comprising:
   a component that receives from a user computer (915) desired operating conditions of a turbocompressor;
   a component that sends to the user computer an indication (500) of a turbocompressor that has been identified based on analysis of the desired operating conditions;
   a component that receives from the user computer modified operating conditions (300) for the identified turbocompressor; and
   a component that sends to the user computer information (600, 610, 620) describing performance of the identified turbocompressor with the modified operating conditions.
13. The computer system of clause 12 wherein the operating conditions (300) include process gas handled flow, process gas suction pressure, process gas suction temperature, process gas discharge pressure, or process gas composition.
14. The computer system of clauses 12-14 wherein the operating conditions (300) include environment temperature, relative humidity, or fuel gas composition.
15. The computer system of clauses 12-14 including a component that sends to the user computer a display page (610) for graphically displaying turbocompressor performance information for the identified turbocompressor.
16. The computer system of clause 15 wherein the turbocompressor performance information includes a gas turbine performance curve, a compressor absorbed power curve, a compressor polytropic head curve, a compressor polytropic efficiency curve, a compressor discharge pressure curve, or a compressor discharge temperature curve.
17. The computer system of clauses 12-16 including a component that sends to the user computer a display page (620) that provides a graphic representation of the turbine of the identified turbocompressor.
18. The computer system of clause 17 including a component that sends to the user computer a display page (710) that provides a description of technical data, control system, or reference list associated with the turbine of the identified turbocompressor.
19. The computer system of clauses 12-18 including a component that sends to the user computer a display page (620) that provides a graphic representation of the compressor of the identified turbocompressor.
20. The computer system of clause 19 including a component that sends to the user computer a display page that provides a description of technical data, control system, or reference list associated with the compressor of the identified turbocompressor.
21. The computer system of clauses 12-20 including a component that sends to the user computer a display page (620) that provides a graphic representation of the layout of the identified turbocompressor.
22. The computer system of clauses 12-21 including a component that sends to the user computer a display page (710) through which the user can specify technical scope of supply for the identified turbocompressor.
23. The computer system of clause 22 including a component that sends to the user computer a display page (710) through which a request for quotation for the identified turbocompressor with the specified scope of supply can be submitted.
24. A computer-readable medium containing instructions for controlling a computer system to display results of a turbocompressor analysis at a user computer (915), the turbocompressor having a turbine and a compressor, by a method comprising:
   sending a data entry web page (300, 400) to the user computer, the data entry web page for entry of operating conditions of a desired turbocompressor;
   receiving (901) from the user computer the operating conditions entered by the user through the data entry web page; and
   sending a results web page (600, 610, 620) to the user computer, the results web page identifying a turbocompressor that satisfies the operating conditions received entered by the user.
25. The computer-readable medium of clause 24 including providing a web page (610) for graphically displaying turbocompressor performance information for the identified turbocompressor.
26. The computer-readable medium of clause 25 wherein the turbocompressor performance information includes a gas turbine performance curve, a compressor absorbed power curve, a compressor polytropic head curve, a compressor polytropic efficiency curve, a compressor discharge pressure curve, or a compressor discharge temperature curve.
27. The computer-readable medium of clauses 24-26 including providing a web page (620) that provides a graphic representation of the turbine of the identified turbocompressor.

## Claims

1. A computer-based method for displaying results of a turbocompressor analysis at a user computer (915), the turbocompressor having a turbine and a compressor, the method comprising:
sending a data entry web page (300, 400) to the user computer, the data entry web page for entry of operating conditions of a desired turbocompressor;
receiving (901) from the user computer the operating conditions entered by the user through the data entry web page; and
sending a results web page (600, 610, 620) to the user computer, the results web page identifying a turbocompressor that satisfies the operating conditions received entered by the user.

2. The method of claim 1 including providing a web page (610) for graphically displaying turbocompressor performance information for the identified turbocompressor.

3. The method of claim 1 or claim 2 including providing a web page (620) that provides a graphic representation of one or more of the turbine, the compressor, and the layout, of the identified turbocompressor.

4. The method of any one of claims 1 to 3 including providing a web page (710) through which the user can specify technical scope of supply for the identified turbocompressor.

5. The method of any one of claims 1 to 4 including:
sending to the user computer a modify data entry web page for modifying the entered operating conditions;
receiving from the user computer modified operating conditions entered by the user through the modify data entry web page; and
sending to the user computer a web page indicating performance of the identified turbocompressor with the modified operating conditions.

6. A computer system through which users can access turbocompressor information, the turbocompressor having a turbine and a compressor, comprising:
a component that receives from a user computer (915) desired operating conditions of a turbocompressor;
a component that sends to the user computer an indication (500) of a turbocompressor that has been identified based on analysis of the desired operating conditions;
a component that receives from the user computer modified operating conditions (300) for the identified turbocompressor; and
a component that sends to the user computer information (600, 610, 620) describing performance of the identified turbocompressor with the modified operating conditions.

7. The computer system of claim 6 wherein the operating conditions (300) include process gas handled flow, process gas suction pressure, process gas suction temperature, process gas discharge pressure, or process gas composition, environment temperature, relative humidity, or fuel gas composition.

8. The computer system of claim 6 or claim 7 including a component that sends to the user computer a display page (610) for graphically displaying turbocompressor performance information for the identified turbocompressor.

9. The computer system of any one of claims 6 to 8 including a component that sends to the user computer a display page (620) that provides a graphic representation of one or more of the turbine, the compressor, or the layout, of the identified turbocompressor.

10. A computer-readable medium containing instructions for controlling a computer system to display results of a turbocompressor analysis at a user computer (915), the turbocompressor having a turbine and a compressor, by a method comprising:
sending a data entry web page (300, 400) to the user computer, the data entry web page for entry of operating conditions of a desired turbocompressor;
receiving (901) from the user computer the operating conditions entered by the user through the data entry web page; and
sending a results web page (600, 610, 620) to the user computer, the results web page identifying a turbocompressor that satisfies the operating conditions received entered by the user.
